# EUROPÄISCHE PATENTSCHRIFT

(11) **EP 3 827 175 B1**
(45) Veröffentlichungstag und Bekanntmachung des Hinweises auf die Patenterteilung: **18.12.2024**
(21) Anmeldenummer: 19749607.8
(22) Anmeldetag: 23.07.2019
(51) Int. Cl.: F16B 5/02, F16B 37/00

(54) **BAUTEIL**
COMPONENT
ÉLÉMENT STRUCTURAL

(30) Priorität: 25.07.2018 DE 102018212363
(43) Veröffentlichungstag der Anmeldung: 02.06.2021
(73) Patentinhaber: AUDI AG, 85045 Ingolstadt (DE)
(72) Erfinder: SZÉKELY, Béla, 9012 Györ (HU); SZABÓ, Bence, 9354 Osli (HU); BOLDT, Arne, 85049 Ingolstadt (DE)
(86) Internationale Anmeldenummer: PCT/EP2019/069727
(87) Internationale Veröffentlichungsnummer: WO 2020/020847

(56) Entgegenhaltungen:
- DE-A1- 102009 032 945
- DE-A1- 102016 220 587
- US-A- 4 905 569
- US-B2- 7 946 794

## Beschreibung

Die Erfindung betrifft ein Bauteil mit einer Ausnehmung zur Aufnahme eines an dem Bauteil zu befestigenden Befestigungselements.

An einem Bauteil kann eine Schraubverbindung angeordnet sein, wobei eine Aufnahme für eine Schraube an dem Bauteil durch Verstärkungsrippen verstärkt ist, die insbesondere bei einer hochbelasteten Schraubverbindung mechanische Belastungen aufnehmen und ableiten.

Die Druckschrift DE 41 38 372 A1 beschreibt ein Gußteil für eine Fahrzeugkarosserie, wobei an einer Gußteilwand zwei in einem Abstand zueinander angeordnete Masterpunkte als angeformte Erhebungen und/oder eingeformte Vertiefungen vorgesehen sind.

Eine Vorrichtung zur Befestigung eines Handgriffs an einem Koch- oder Bratgefäß sind aus der Druckschrift DE 199 40 970 A1 bekannt.

Eine Brennkraftmaschine mit wenigstens zwei Zylindern ist aus der Druckschrift EP 2 143 925 A1 bekannt. Dabei sind an einer Turbine der Brennkraftmaschine Butzen zum Durchführen von Schrauben angeordnet.

Eine Befestigungsvorrichtung zum Befestigen eines Bauteils ist aus der Druckschrift DE 10 2016 220 587 A1 bekannt. Diese Befestigungsvorrichtung umfasst einen Aufnahmebereich mit einer Öffnung zum Aufnehmen eines Befestigungsmittels und einen Abstützbereich, der insbesondere kegelförmig oder pyramidenförmig ausgebildet ist. Außerdem umfasst die Befestigungsvorrichtung einen Aufnahmebereich, der aus einem Gussmaterial, bspw. durch Spritzguss von Kunststoff oder einem metallischen Gusswerkstoff, gebildet ist.

Eine Befestigungsmutter ist in der Druckschrift US 7 946 794 B2 beschrieben. Diese umfasst einen hexagonalen Körper und eine zirkulare Basis. Dabei ist in den hexagonalen Körper ein Loch gebohrt. Weiterhin ist eine Wandung dieser Befestigungsmutter aus Plastik gebildet.

Eine Gewindeplatte mit Versteifungsrippen ist in der Druckschrift DE 10 2009 032 945 A1 beschrieben. Diese besteht aus einer Grundplatte mit einer angeformten Buchse zur Bildung eines Gewindedurchzugs, wobei an der Grundplatte und der Buchse vier radialsymmetrisch nach außen verlaufende Versteifungsrippen angeformt sind. Dabei wird die Gewindeplatte in einem Kaltpressverfahren hergestellt.

Ein weiteres als Abstandshalter ausgeführtes Bauteil ist aus der US 4905569A bekannt.

Vor diesem Hintergrund war es eine Aufgabe, an einem Bauteil eine stabile Aufnahme für ein Befestigungselement bereitzustellen.

Diese Aufgabe wird durch ein Bauteil mit den Merkmalen des unabhängigen Patentanspruchs 1 gelöst. Ausführungsformen des Bauteils gehen aus den abhängigen Patentansprüchen hervor.

Das erfindungsgemäße Bauteil weist einen Träger auf, für den ein ebener Bereich bzw. eine Ebene definiert ist, der bzw. die Teil des Trägers ist, wobei der Träger neben diesem ebenen Bereich eine zumindest teilweise bzw. abschnittsweise kegelmantelförmige, trichterförmige und/oder zeltförmige Traghülle aufweist, die sich aus dem ebenen Bereich des Trägers heraus erhebt. Dabei ist an einem Ende der zumindest teilweise kegelmantelförmigen, trichterförmigen und/oder zeltförmigen Traghülle, das von dem ebenen Bereich des Trägers beabstandet und/oder abgewandt ist, eine Ausnehmung zur Aufnahme eines an dem Bauteil zu befestigenden bzw. befestigbaren Befestigungselements angeordnet.

Das vorgestellte Bauteil ist in möglicher Ausgestaltung als Teil einer Bauteilanordnung und/oder als Rohling und/oder Halbzeug einer Bauteilanordnung bzw. eines Werkstücks ausgebildet. Dabei ist es möglich, dass ein erfindungsgemäßes Werkstück bzw. eine erfindungsgemäße Bauteilanordnung mindestens ein erfindungsgemäßes Bauteil und somit einen Träger mit der insbesondere kegelmantelförmigen, insbesondere trichterförmigen oder zeltförmigen Traghülle aufweist. Es ist auch möglich, dass das Bauteil selbst als Bauteilanordnung ausgebildet ist. Ferner ist es auch möglich, dass die Traghülle als Erhebung ausgebildet sein kann, die sich ausgehend von dem ebenen Bereich zu dem Ende mit der Ausnehmung erstreckt, und dabei insbesondere ein nicht zwangsläufig symmetrisches Volumen einschließt.

Die zumindest teilweise kegelmantelförmige Traghülle kann alternativ oder ergänzend auch als zumindest teilweise trichterförmige und/oder zeltförmige Traghülle, die sich aus dem ebenen Bereich bzw. der Ebene des Trägers des Bauteils erhebt, ausgebildet sein und/oder bezeichnet werden. Dabei ist es möglich, dass eine Grundfläche zur Definition der zumindest teilweise kegelmantelförmigen, trichterförmigen und/oder zeltförmigen Traghülle in dem ebenen Bereich des Trägers des Bauteils liegt, aus der sich die Traghülle erhebt, wobei die Grundfläche ellipsenförmig und somit in Ausgestaltung auch kreisförmig sein kann. Die Traghülle weist erfindungsgemäß eine Form eines schiefen Kegelmantels auf.

Eine Achse, entlang der sich die zumindest teilweise kegelmantelförmige, trichterförmige und/oder zeltförmige Traghülle ausgehend von dem ebenen Bereich der Trägers erstreckt, ist zu dem ebenen Bereich unter einem beliebigen Winkel und somit bspw. auch unter 90° orientiert.

Dass die Traghülle zumindest teilweise kegelmantelförmig, trichterförmig und/oder zeltförmig ist, bedeutet, dass mindestens ein Teil der Traghülle auch eine Form eines Kegelmantels, eines Trichters und/oder eines Zelts aufweist, wobei ein anderer Teil der Traghülle eine andere Form, bspw. eine Form einer ebenen Fläche oder einer gebogenen Fläche aufweist, wobei die Traghülle zumindest zu einem Teil kegelmantelförmig, trichterförmig und/oder zeltförmig und zu einem anderen Teil andersförmig ausgebildet ist. Es ist auch möglich, dass die Traghülle vollständig kegelmantelförmig, trichterförmig und/oder zeltförmig ausgebildet ist.

Hierbei ist es möglich, dass die zumindest teilweise kegelmantelförmige, trichterförmige und/oder zeltförmige Traghülle einen zumindest teilweise kegelmantelförmigen, trichterförmigen und/oder zeltförmigen Bereich bzw. Raum, d. h. ein zumindest teilweise kegelförmiges Volumen umgibt, umschließt bzw. umhüllt.

Das Bauteil weist in Ausgestaltung einen Butzen mit einem Körper auf, der an dem Ende der zumindest teilweise kegelmantelförmigen, trichterförmigen und/oder zeltförmigen Traghülle angeordnet ist und eine Wandung für die Ausnehmung bildet, wobei das Befestigungselement in der Ausnehmung und somit auch in dem Butzen anordenbar bzw. anzuordnen ist, wobei eine Öffnung der Ausnehmung an dem Ende der zumindest teilweise kegelmantelförmigen, trichterförmigen und/oder zeltförmigen Traghülle angeordnet ist. Hierbei ist es möglich, dass das Ende der Traghülle auch einem Ende des Butzens entspricht, die an diesem gemeinsamen Ende miteinander verbunden sind. Die Ausnehmung in dem Körper des Butzens kann eine zylinderförmige Innenwand und ein Innengewinde für das Befestigungselement aufweisen. Über ein derartiges Befestigungselement kann an dem beschriebenen Bauteil, das die Traghülle aufweist, ein weiteres Bauteil befestigt werden.

Weiterhin ist es möglich, dass die zumindest teilweise kegelmantelförmige, trichterförmige und/oder zeltförmige Traghülle den Körper des Butzens zumindest teilweise umgibt, umschließt bzw. umhüllt.

Üblicherweise ist die Ausnehmung zum Befestigen eines als Schraube ausgebildeten Befestigungselements an dem Bauteil ausgebildet.

Das Bauteil ist erfindungsgemäß als Schmiedeteil ausgebildet.

Das Bauteil kann als Teil eines Kraftfahrzeugs ausgebildet und/oder vorgesehen sein, wobei das Bauteil als Teil des Kraftfahrzeugs verwendbar ist.

In möglicher Ausgestaltung wird mit der zumindest teilweise kegelmantelförmigen, trichterförmigen und/oder zeltförmigen Traghülle, an deren Ende die Ausnehmung zur Aufnahme des Befestigungselements angeordnet ist, für den Fall, dass das Befestigungselement bspw. als Schraube ausgebildet ist, ein zumindest teilweise kegelmantelförmiger, trichterförmiger und/oder zeltförmiger Schraubbutzen für eine hoch belastbare Schraubverbindung an dem Schmiedebauteil bereitgestellt.

Mit der zumindest teilweise kegelmantelförmigen, trichterförmigen und/oder zeltförmigen Traghülle, die auch den Butzen, bspw. Schraubbutzen, umfasst, können ansonsten übliche Verstärkungsrippen für eine Schraubverbindung ersetzt werden. Üblicherweise war nach gängigen Konstruktionsrichtlinien vorgesehen, Verstärkungsrippen jeweils in einer Belastungsrichtung auszurichten. Durch entsprechende Formung der zumindest teilweise kegelmantelförmigen, trichterförmigen und/oder zeltförmigen Traghülle ist es ebenfalls möglich, Belastungsrichtungen des Befestigungselements zu berücksichtigen. Bislang wurde eine Anzahl, Höhe und Dicke der Verstärkungsrichtungen abhängig von einer Belastung eines Schraubbutzens eingestellt. Entsprechend ist nunmehr bspw. eine Höhe der Traghülle ausgehend von dem ebenen Bereich und/oder auch eine Dicke bzw. Wandstärke der Traghülle belastungsabhängig variierbar.

Die neue Gestaltung eines Schraubbutzens als Komponente der zumindest teilweise kegelmantelförmigen, trichterförmigen und/oder zeltförmigen Traghülle, die zur Stabilisierung des Schraubbutzens ausgebildet ist, ergibt, dass das bspw. als Schraube ausgebildete Befestigungselement an dem Bauteil bzw. der Bauteilanordnung stärker mechanisch belastet werden kann. Durch die zumindest teilweise kegelmantelförmige, trichterförmige und/oder zeltförmige Gestaltung der Traghülle können Kräfte, die aus unterschiedlichen Belastungsrichtungen auf das an dem Bauteil befestigte Befestigungselement wirken, besser aufgenommen und abgeleitet werden. Hierbei ist es möglich, mechanische Spannungsspitzen zu eliminieren. Es ist auch möglich, akustische Eigenschaften des Bauteils zu verbessern. Durch Ersetzen der sonst üblichen Verstärkungsrippen durch die Traghülle können Materialanhäufungen reduziert und bspw. eine Gießbarkeit des Bauteils verbessert werden. Aufgrund der Geometrie und/oder Gestaltung der Traghülle zum Stabilisieren des Schraubbutzens kann eine Gewichtseinsparung bzw. Gewichtsreduzierung von ca. 15 % erreicht werden. Es ist weiterhin möglich, das Bauteil mit der Traghülle und dem Butzen mit der Ausnehmung zur Aufnahme des Befestigungselements komfortabel mit einem CAD-Programm zu modellieren, wobei größere Freiheiten bei einem Aufbau eines Modells für das Bauteil gegeben sind. Hierbei können auch neue Möglichkeiten der CAD-Software, bspw. bezüglich Freiformflächen, benutzt werden, wodurch auch Zeit eingespart werden kann.

Insbesondere für das als Schmiedebauteil ausgebildete Bauteil ist die zumindest teilweise kegelmantelförmige, trichterförmige und/oder zeltförmige Ausgestaltung der Traghülle zum Stabilisieren des Butzens günstig.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, solange die Merkmalskombination unter den Anspruchswortlaut fällt.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung ein Beispiel für ein Bauteil, wie es aus dem Stand der Technik bekannt ist.
Figur 2 zeigt in schematischer Darstellung eine erste Ausführungsform des erfindungsgemäßen Bauteils.
Figur 3 zeigt in schematischer Darstellung eine zweite Ausführungsform des erfindungsgemäßen Bauteils.

Die Figuren werden zusammenhängend und übergreifend beschrieben, gleichen Bezugsziffern sind dieselben Komponenten zugeordnet.

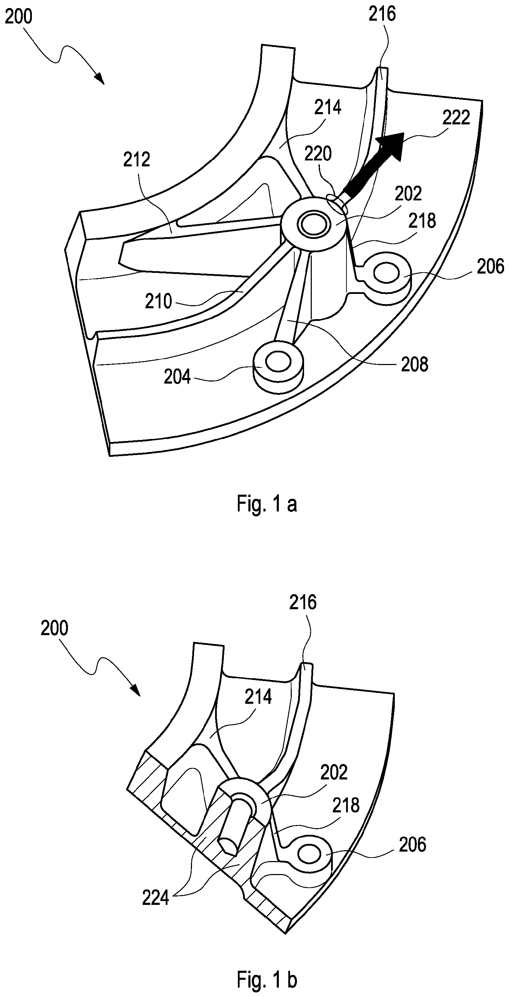

Das in Figur 1a schematisch dargestellte Bauteil 200 weist einen ersten Butzen 202 sowie zwei weitere Butzen 204, 206 auf, wobei jeweils ein

Butzen 202, 204, 206 zur Aufnahme einer Schraube vorgesehen ist. Figur 1b zeigt einen Teil des Bauteils 200 entlang eines Schnitts durch den ersten Butzen 202.

Wie beide Figuren 1a und 1b zeigen, ist der erste Butzen 202 durch mehrere Rippen 208, 210, 212, 214, 216, 218 an einer Wand des Bauteils 200, wobei sich der Butzen 202 ausgehend von der Wand erhebt, abgestützt. Hierbei sind die Rippen 208, 210, 212, 214, 216, 218 um den Butzen 202 herum sternförmig angeordnet. Weiterhin ist in Figur 1a durch eine Ellipse 220 eine Spannungsspitze für den Butzen 202 und durch einen Pfeil 222 eine mechanische Belastung des Butzens 202 angedeutet. In Figur 1b sind zusätzlich Materialanhäufungen 224 angedeutet, die sich für den Butzen 202 aufgrund der Rippen 208, 210, 212, 214, 216, 218 ergeben.

Beim Stand der Technik werden aufgrund hoher mechanischer Belastungen häufig sehr dicke Rippen 208, 210, 212, 214, 216, 218 benötigt. Falls jedoch eine mechanische Belastungsrichtung nicht konstant ist, ist es erforderlich, Rippen 208, 210, 212, 214, 216, 218 zwingend in mehreren Belastungsrichtungen anzuordnen. Hierbei ist insbesondere für den Fall eines Einsatzes des Bauteils 200 in einem Fahrzeug zu berücksichtigen, dass Belastungsrichtungen selten konstant sind, weshalb die Rippen 208, 210, 212, 214, 216, 218 nicht immer optimal ausgenutzt werden können. Der erste Butzen 202 bzw. Schraubbutzen ist durch die Rippen 208, 210, 212, 214, 216, 218 an dem Bauteil 200 angebunden. Allerdings können trotz der zahlreichen eingesetzten Rippen 208, 210, 212, 214, 216, 218 an einem Anfang einer jeweiligen Rippe 208, 210, 212, 214, 216, 218 unzulässig hohe Spannungsspitzen entstehen. Außerdem kann die sternförmige Anordnung der Rippen 208, 210, 212, 214, 216, 218 bei dem bspw. als Gußbauteil ausgebildeten Bauteil 200 ungünstige Materialanhäufungen 224 verursachen.

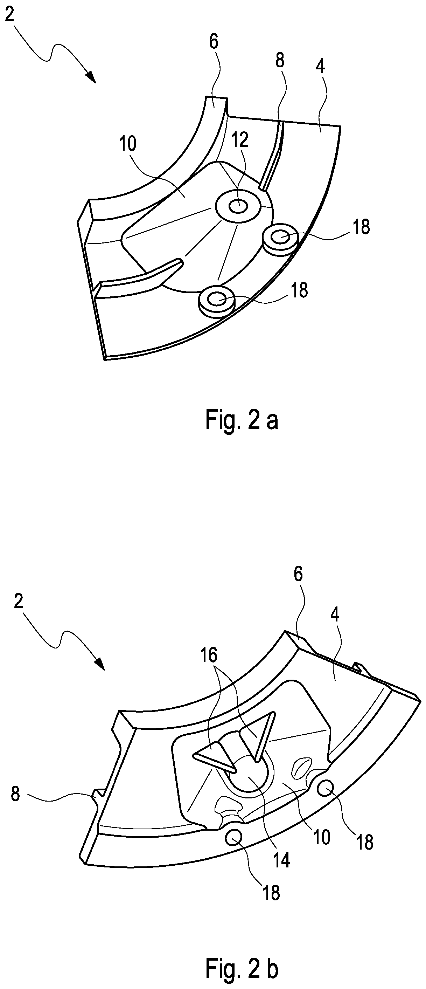

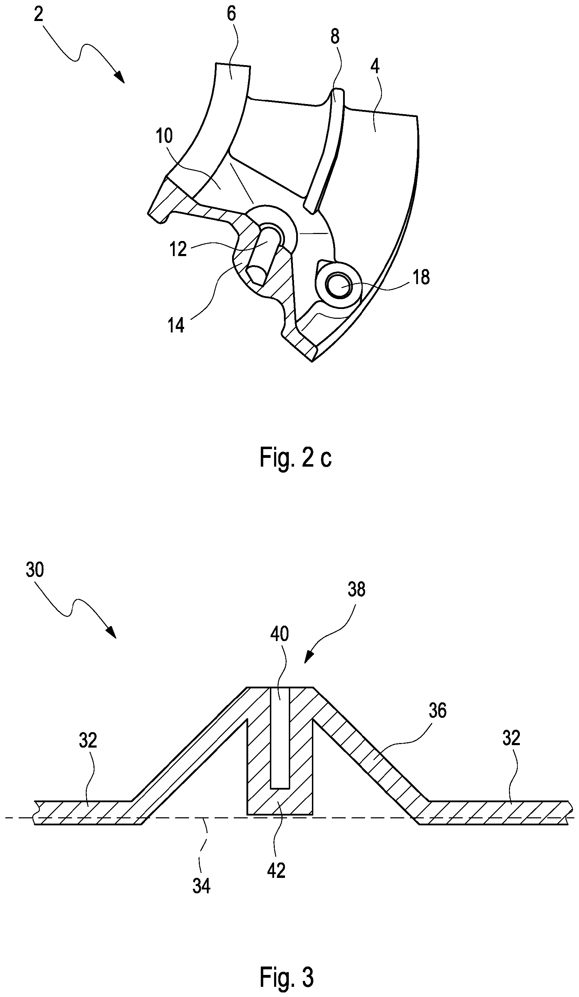

Die erste Ausführungsform des erfindungsgemäßen Bauteils 2 bzw. eines entsprechenden erfindungsgemäßen Werkstücks bzw. Halbzeugs ist in den Figuren 2a, 2b und 2c aus unterschiedlichen Perspektiven schematisch dargestellt. Dabei weist das Bauteil 2 einen Träger 4 auf, der hier als Teil eines Kreisrings mit einem inneren und einem äußeren Durchmesser ausgebildet ist. Dieser Träger 4 ist mit einem Rohrabschnitt 6 des Bauteils 2 verbunden. Auf einer Oberfläche des Trägers 4 ist hier auch eine Schwelle 8 angeordnet.

Weiterhin ist ein ebener Bereich bzw. eine Ebene definiert, der bzw. die sich in dem Träger 4, insbesondere zwischen einer Oberseite des Trägers 4, die in Figur 2a und 2c erkennbar ist, und einer Unterseite des Trägers 4, die in Figur 2b erkennbar ist, befindet bzw. darin liegt. Ausgehend von dem ebenen Bereich in dem Träger 4 und somit einer Wand des Bauteils 2 bzw. eines entsprechenden Werkstücks erhebt sich hier eine kegelmantelförmige, trichterförmige und/oder zeltförmige Traghülle 10 des Trägers 4, wobei an einem Ende der Traghülle 10, das von dem Träger 4 bzw. von dem ebenen Bereich abgewandt ist, eine Ausnehmung 12 zur Aufnahme eines Befestigungselements angeordnet ist.

Dabei ist die Traghülle 10 in Figur 2a von oben und in Figur 2b von unten gezeigt. In Figur 2a ist eine Außenwand und in Figur 2b eine Innenwand der Traghülle 10 erkennbar. Dabei geht insbesondere aus Figur 2b hervor, dass ein Körper eines Butzens 14 eine Wandung der Ausnehmung 12 bildet. Hierzu wird auch auf Figur 2c verwiesen, die das Bauteil 2 entlang eines Schnitts durch die Traghülle 10, die Ausnehmung 12 und den Butzen 14 zeigt.

Je nach Definition ist die Traghülle 10, die den Butzen 14 zumindest teilweise umgibt und/oder umschließt, eine Erhebung des Trägers 4 und somit ein Teil bzw. Fortsatz des Trägers 4, die sich aus dem ebenen Bereich im Träger 4 erhebt bzw. daraus heraustritt. Die Traghülle 10 ist hier zumindest teilweise, insbesondere größtenteils kegelmantelförmig bzw. trichterförmig und/oder zeltförmig ausgebildet und einerseits durch die Oberfläche des Trägers 4 und andererseits durch den Rohrabschnitt 6 begrenzt. Dabei ersetzt die Traghülle 10 die im Stand der Technik erforderlichen Rippen 208, 210, 212, 214, 216, 218 zum Stabilisieren des Butzens 14 mit der Ausnehmung 12 zur Aufnahme des Befestigungselements.

Wie Figur 2b zeigt, umgibt bzw. umschließt die Innenwand der Traghülle 10, die von der in Figur 2a gezeigten Außenwand der Traghülle 10 abgewandt ist, einen Körper des Butzens 14, so dass der Butzen 14 innerhalb der Traghülle 10 angeordnet ist. Dabei sind das Ende der Traghülle 10, das von dem Träger 4 bzw. von dem ebenen Bereich abgewandt ist, und ein Ende des Butzens 14, der eine Wandung für die Ausnehmung 12 bildet, miteinander verbunden, wobei es je nach Definition möglich ist, dass die Traghülle 10 und der Butzen 14 bzw. der Körper des Butzens 14 ein gemeinsames Ende bilden bzw. aufweisen. Ausgehend von dem gemeinsamen Ende bzw. den gemeinsamen Enden sind die Innenseite der Traghülle 10 und der Butzen 14 bzw. dessen Körper in Richtung des ebenen Bereichs des Trägers 4 voneinander getrennt und/oder beabstandet.

Figur 2b zeigt auch, dass in möglicher Ausgestaltung des Bauteils 2 der Körper des Butzens 14 über zusätzliche innere Rippen 16 mit der Innenwand der Traghülle 10 verbunden ist. Außerdem zeigen die Figuren 2a, 2b, 2c unabhängig von der Ausgestaltung des erfindungsgemäßen Bauteils 2 zwei weitere Löcher 18, die in den Träger 4 des Bauteils 2 eingebracht sind.

Die zweite Ausführungsform des erfindungsgemäßen Bauteils 30 bzw. eines entsprechenden erfindungsgemäßen Werkstücks ist in Figur 3 in Schnittdarstellung dargestellt. Dabei umfasst dieses Bauteil 30 einen ebenen, hier flachen Körper bzw. Träger 32, der zugleich als Teil einer Wand des Bauteils 30 definiert und/oder vorgesehen ist. Dabei ist hier eine Ebene bzw. ein ebener Bereich 34 definiert, die bzw. der in dem Träger 32 liegt, darin angeordnet ist bzw. sich darin befindet.

Aus dem ebenen Bereich 34 des Träger 32 heraus erhebt sich hier eine kegelmantelförmige bzw. trichterförmige und/oder zeltförmige Traghülle 36, die als Fortsatz bzw. Erhebung des Trägers 32 und somit als Teil des Trägers 32 ausgebildet ist. Hierbei weisen der Träger 32 und die Traghülle 36, abgesehen von konstruktiven und/oder geometrischen Abweichungen, ungefähr dieselbe Wandstärke bzw. Dicke auf. Ein gemeinsames Ende 38 der kegelmantelförmigen, trichterförmigen und/oder zeltförmigen Traghülle 36 und eines Butzens 42 ist von dem Träger 32 sowie dem ebenen Bereich 34 abgewandt und umschließt eine Öffnung einer rotationssymmetrischen Ausnehmung 40, die zur Aufnahme eines rotationssymmetrischen Befestigungselements, bspw. einer Schraube, ausgebildet ist. Die Traghülle 36 erstreckt sich ausgehend von dem ebenen Bereich 34 und/oder dem Träger 32 des Bauteils 30 in Richtung des Endes 38. Dabei ist der Butzen 42 je nach Definition ein Fortsatz der Traghülle 36, da der Butzen 42 und die Traghülle 36 an dem Ende 38 miteinander verbunden sind. Die Ausnehmung 40 ist von einem Körper des Butzens 42 umschlossen, der eine Wandung der Ausnehmung 40 bildet. Eine Innenseite der Traghülle 36 umgibt und/oder umschließt einen kegelförmigen Bereich bzw. ein kegelförmiges Volumen, in dem der Butzen 42 angeordnet ist, wobei eine Innenseite der Traghülle 36 und der Butzen 42 in dem kegelförmigen Bereich voneinander beabstandet sind. In Ausgestaltung sind der Träger 32, die Traghülle 36 und der Butzen 38 als einstückiges zusammenhängendes Bauteil 30 bzw. Werkstück ausgebildet, das durch ein Gussverfahren (nicht beansprucht) oder aus einem Schmiedeteil, wie beansprucht, hergestellt ist. Über das Befestigungselement, das an dem Bauteil 30 befestigt werden kann, kann an dem Bauteil 30 ein weiteres, hier nicht gezeigtes Bauteil befestigt werden.

### Bezugszeichen

- 2: Bauteil
- 4: Träger
- 6: Rohrabschnitt
- 8: Schiene
- 10: Traghülle
- 12: Ausnehmung
- 14: Butzen
- 16: Rippen
- 18: Loch
- 30: Bauteil
- 32: Träger
- 34: ebener Bereich
- 36: Traghülle
- 38: Ende
- 40: Ausnehmung
- 42: Butzen
- 200: Bauteil
- 202, 204, 206: Butzen
- 208, 210, 212: Rippe
- 214, 216, 218: Rippe
- 220: Ellipse
- 222: Pfeil

## Patentansprüche

1. Bauteil mit einem Träger (4, 32), für den ein ebener Bereich (34) definiert ist, wobei der Träger (4, 32) eine zumindest teilweise kegelmantelförmige, trichterförmige oder zeltförmige Traghülle (10, 36) aufweist, die sich aus dem ebenen Bereich (34) heraus erhebt, wobei an einem Ende (38) der zumindest teilweise kegelmantelförmigen, trichterförmigen oder zeltförmigen Traghülle (10, 36), das von dem ebenen Bereich (34) des Trägers (4, 32) abgewandt ist, eine Ausnehmung (12, 40) zur Aufnahme eines an dem Bauteil (2, 30) zu befestigenden Befestigungselements angeordnet ist, **dadurch gekennzeichnet, dass** das Bauteil (2, 30) als Schmiedebauteil ausgebildet ist, wobei die Traghülle (10, 36) eine Form eines schiefen Kegelmantels aufweist, wobei eine Achse, entlang der sich die zumindest teilweise kegelmantelförmige, trichterförmige oder zeltförmige Traghülle (10, 36) ausgehend von dem ebenen Bereich (34) des Trägers (4, 32) erstreckt, zu dem ebenen Bereich (43) unter einem beliebigen Winkel, insbesondere unter 90°, orientiert ist.

2. Bauteil nach Anspruch 1, bei dem die zumindest teilweise kegelmantelförmige, trichterförmige oder zeltförmige Traghülle (10, 36) einen zumindest teilweise kegelförmigen, trichterförmigen oder zeltförmigen Bereich umschließt.

3. Bauteil nach Anspruch 1 oder 2, das einen Butzen (14, 42) aufweist, der an dem Ende (38) der zumindest teilweise kegelmantelförmigen, trichterförmigen oder zeltförmigen Traghülle (10, 36) angeordnet ist und eine Wandung für die Ausnehmung (12, 40) bildet, wobei das Befestigungselement in der Ausnehmung (12, 40) anzuordnen ist, wobei eine Öffnung der Ausnehmung (12, 40) an dem Ende (38) der zumindest teilweise kegelmantelförmigen, trichterförmigen oder zeltförmigen Traghülle (10, 36) angeordnet ist.

4. Bauteil nach Anspruch 3, bei dem die zumindest teilweise kegelmantelförmige, trichterförmige oder zeltförmige Traghülle (10, 36) den Butzen (14, 42) zumindest teilweise umschließt.

5. Bauteil nach einem der voranstehenden Ansprüche, bei dem die Ausnehmung (12, 40) zum Befestigen eines als Schraube ausgebildeten Befestigungselements ausgebildet ist.

6. Bauteil nach einem der voranstehenden Ansprüche, das als Teil eines Kraftfahrzeugs ausgebildet ist.

## Claims

1. Component with a support (4, 32) for which a flat region (34) is defined, wherein the support (4, 32) has a support cover (10, 36) which at least partly has the shape of a hollow cone, a funnel, or a tent and which is raised out of the flat region (34), wherein one end (38) of the at least partly hollow cone-shaped, funnel-shaped, or tent-shaped support cover (10, 36), said end facing away from the flat region (34) of the support (4, 32), is equipped with a recess (12, 40) for receiving a securing element to be secured to the component (2, 30), **characterized in that** the component (2, 30) is formed as a forged component, wherein
the support cover (10, 36) has the shape of an inclined hollow cone, wherein an axis along which the at least partly hollow cone-shaped, funnel-shaped, or tent-shaped support cover (10, 36) extends from the flat region (34) of the support (4, 32) is oriented at any angle, in particular at 90°, to the flat region (43).

2. Component according to claim 1, wherein the at least partly hollow cone-shaped, funnel-shaped, or tent-shaped support cover (10, 36) encloses an at least partly hollow cone-shaped, funnel-shaped, or tent-shaped region.

3. Component according to claim 1 or 2, which has a slug (14, 42) which is arranged on the end (38) of the at least partly hollow cone-shaped, funnel-shaped, or tent-shaped support cover (10, 36) and forms a wall for the recess (12, 40), wherein the securing element is to be arranged in the recess (12, 40), wherein an opening of the recess (12, 40) is arranged on the end (38) of the at least partly hollow cone-shaped, funnel-shaped, or tent-shaped support cover (10, 36).

4. Component according to claim 3, wherein the at least partly hollow cone-shaped, funnel-shaped, or tent-shaped support cover (10, 36) encloses the slug (14, 42) at least partly.

5. Component according to any one of the preceding claims, wherein the recess (12, 40) is designed for securing a securing element designed as a screw.

6. Component according to any one of the preceding claims, which is formed as a part of a motor vehicle.

## Revendications

1. Composant avec un support (4, 32) pour lequel une zone plane (34) est définie, dans lequel le support (4, 32) présente une enveloppe de support (10, 36) au moins partiellement en forme d'enveloppe conique, en forme d'entonnoir ou en forme de tente, qui s'élève à partir de la zone plane (34), dans lequel un évidement (12, 40) destiné à recevoir un élément de fixation à fixer sur le composant (2, 30) est disposé à une extrémité (38) de l'enveloppe de support (10, 36) au moins partiellement en forme d'enveloppe conique, en forme d'entonnoir ou en forme de tente, qui est opposée à la zone plane (34) du support (4, 32), **caractérisé en ce que** le composant (2, 30) est conçu en tant que composant forgé, dans lequel
l'enveloppe de support (10, 36) présente une enveloppe conique inclinée, dans lequel un axe, le long duquel l'enveloppe de support (10, 36) au moins partiellement en forme d'enveloppe conique, en forme d'entonnoir ou en forme de tente s'étend à partir de la zone plane (34) du support (4, 32), est orienté par rapport à la zone plane (43) selon un angle quelconque, en particulier inférieur à 90°.

2. Composant selon la revendication 1, dans lequel l'enveloppe de support (10, 36) au moins partiellement en forme d'enveloppe conique, en forme d'entonnoir ou en forme de tente renferme une zone au moins partiellement en forme conique, en forme d'entonnoir ou en forme de tente.

3. Composant selon la revendication 1 ou 2, qui présente une cive (14, 42) qui est disposée à l'extrémité (38) de l'enveloppe de support (10, 36) au moins partiellement en forme d'enveloppe conique, en forme d'entonnoir ou en forme de tente et qui forme une paroi pour l'évidement (12, 40), dans lequel l'élément de fixation doit être disposé dans l'évidement (12, 40), dans lequel une ouverture de l'évidement (12, 40) est disposée à l'extrémité (38) de l'enveloppe de support (10, 36) au moins partiellement en forme d'enveloppe conique, en forme d'entonnoir ou en forme de tente.

4. Composant selon la revendication 3, dans lequel l'enveloppe de support (10, 36) au moins partiellement en forme d'enveloppe conique, en forme d'entonnoir ou en forme de tente renferme au moins partiellement la cive (14, 42).

5. Composant selon l'une quelconque des revendications précédentes, dans lequel l'évidement (12, 40) est conçu pour fixer un élément de fixation conçu en tant que vis.

6. Composant selon l'une quelconque des revendications précédentes, qui est conçu en tant que partie d'un véhicule automobile.
